(19)

Europäisches
Patentamt

European
Patent Office

Office européen
des brevets

(11) EP 2 002 921 B1

(12) **EUROPEAN PATENT SPECIFICATION**

(45) Date of publication and mention
of the grant of the patent:
**09.12.2015 Bulletin 2015/50**

(51) Int Cl.:
***B23K 20/12*** *(2006.01)*

(21) Application number: **08251427.4**

(22) Date of filing: **14.04.2008**

(54) **Friction stir welded structure derived form Al-RE-TM alloys**

Reibrührgeschweißte Struktur aus Al-RE-TM-Legierungen

Structure soudée par friction malaxage dérivée d'alliages Al-RE-TM

(84) Designated Contracting States:
**DE GB**

(30) Priority: **15.06.2007 US 818701**

(43) Date of publication of application:
**17.12.2008 Bulletin 2008/51**

(73) Proprietors:
 • **United Technologies Corporation
 Hartford, CT 06101 (US)**
 • **The Curators Of The University Of Missouri
 Rolla MO 65409 (US)**

(72) Inventors:
 • **Watson, Thomas J.
 South WIndsor CT 06074 (US)**

 • **Mishra, Rajiv S.
 Rolla MO 65401 (US)**

(74) Representative: **Hall, Matthew Benjamin
 Dehns
 St Bride's House
 10 Salisbury Square
 London EC4Y 8JD (GB)**

(56) References cited:
 **EP-A- 0 833 097      EP-A- 1 471 157
 US-A1- 2004 109 787   US-B1- 6 531 004
 US-B2- 6 939 416**

**Description**

The present invention relates to welding processes and welded structures. In particular, the present invention relates to friction stir welding metal parts derived from aluminum - rare earth - transition metal (Al-RE-TM) alloys to form welded structures having high strengths and ductilities.

Al-RE-TM alloys have been considered for structural applications in the aerospace industry. Such alloys have high strengths, and when processed appropriately, high ductilities, which are necessary for many aerospace applications. Furthermore, due to the lower density of aluminum, as compared to well-established alloys such as titanium, Al-RE-TM alloys are also capable of providing significant weight savings. Various Al-RE-TM alloys are disclosed in European patent application publication no. EP-A-1 471 157, forming the base of the preambles of claims 1 and 8.

United States patent no. US-B-6,939,416 discloses a weldable high strength 6000 series wrought aluminium alloy having a crystalline structure and a method of manufacturing said an alloy. The alloy product may be welded successfully using techniques like, e.g. laser beam welding, friction-stir welding, and TIG-welding.

United States patent application publication no. US-A-2004/0109787 discloses an exfoliation resistant aluminium-magnesium alloy having a crystalline structure, and a welded structure formed of at least one welded plate or extrusion of said aluminium-magnesium alloy formed by MIG welding.

Al-RE-TM alloys derive their strength properties from nanometer-sized grain structures and nanometer sized intermetallic phases. Accordingly, such alloys are not easily fusion welded due to the fact that the refined microstructures that give these alloys their strengths are destroyed within the melt pool, thereby leaving coarse microstructures that are significantly lower in strength as well as ductility. As such, there is a need for welding techniques that substantially preserve the strengths and ductilities of metal parts derived from Al-RE-TM alloys.

The present invention relates to a welded structure and a method of forming the welded structure. The welded structure includes metal parts that are secured together at a welded joint by friction stir welding, where the metal parts are derived from Al-RE-TM alloys.

Viewed from one aspect, the present invention provides a welded structure comprising: a first metal part derived from a devitrified Al-RE-TM alloy having nanometer-sized grain structures and nanometer sized intermetallic phases; a second metal part derived from a the same devitrified Al-RE-TM alloy having nanometer-sized grain structures and nanometer sized intermetallic phases; and a friction stir welded joint between the first metal part and the second metal part without leaving coarse microstructures that reduce strength and ductility.

Viewed from another aspect, the present invention provides a method of forming a welded structure, the method comprising providing a first metal part and a second metal part, wherein the first metal part and the second metal part are each derived from the same devitrified Al-RE-TM alloy having nanometer-sized grain structures and nanometer sized intermetallic phases; and friction stir welding an intersection between the first metal part and the second metal part without leaving coarse microstructures that reduce strength and ductility.

A preferred embodiment of the invention will now be described, by way of example only, with reference to the accompanying drawings, in which:

FIG. 1 is a perspective view of a welded structure being formed with a friction stir welding system;
FIG. 2 is a flow diagram of a method of forming the welded structure with the friction stir welding system;
FIG. 3A is a transmission electron microscopy (TEM) image of an unwelded metal part derived from an Al-RE-TM alloy; and
FIG. 3B is a TEM image of a friction stir welded structure having metal parts derived from an Al-RE-TM alloy.

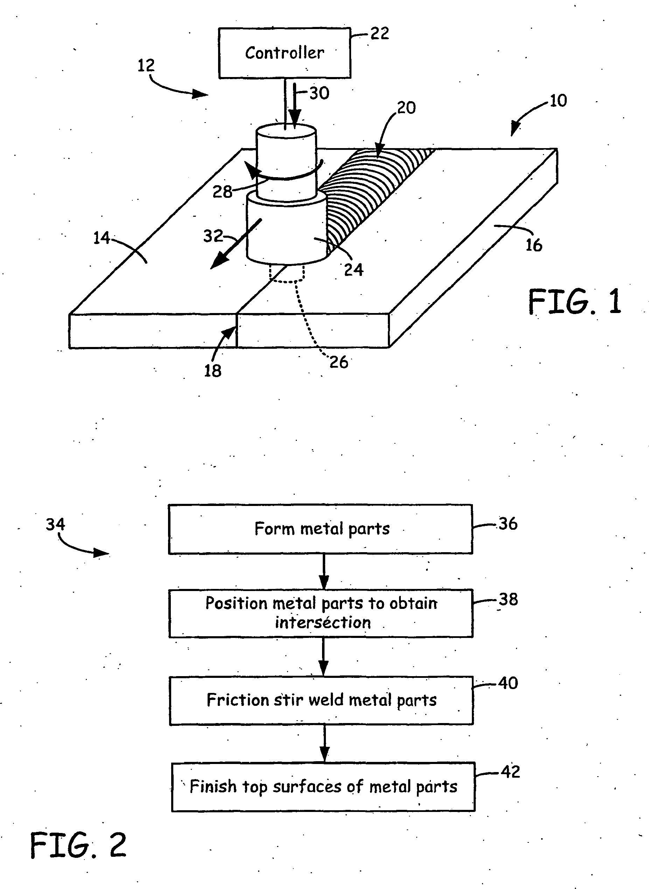

FIG. 1 is a perspective view of welded structure 10 being formed with friction stir welding (FSW) system 12. As shown, welded structure 10 includes metal parts 14 and 16, which abut each other at intersection 18. Metal parts 14 and 16 are subcomponents that are welded together to form welded structure 10, and may be a variety of different subcomponents (e.g., aviation and aerospace parts). Metal parts 14 and 16 are each derived from one or more Al-RE-TM alloys, which provide high strengths and ductilities for welded structure 10. As discussed below, metal parts 14 and 16 are welded together at intersection 18 with FSW system 12 to form welded joint 20, where joint 20 substantially retains the pre-weld strengths of metal parts 14 and 16, and has a ductility that is greater than the pre-weld ductilities of metal parts 14 and 16.

FSW system 12 includes controller 22, tool 24, and pin 26 (pin 26 shown with hidden lines). Pin 26 extends from the bottom surface of tool 24 and is pressed into metal parts 14 and 16 at intersection 18 during a FSW operation. Controller 22 directs tool 24 and pin 26 to rotate in the direction of arrow 28 (or in an opposite rotational direction from arrow 28), and to press down into metal parts 14 and 16 in the direction of arrow 30. This causes pin 26 to dig into metal parts 14 and 16 at intersection 18 until tool 24 reaches metal parts 14 and 16. The depth of pin 26 determines the depth of the weld at intersection 18.

While tool 24 and pin 26 are rotating, controller 22 directs tool 24 and pin 26 to move along intersection 18 in the direction of arrow 32. As tool 24 and pin 26 move along intersection 18, the rotation of tool 24 and pin 26 frictionally heat the Al-RE-TM alloys of metal parts 14 and 16 at intersection 18. The heated alloys enter a plastic-like state, and are stirred by the rotational motion of tool 24 and pin 26, thereby creating welded joint 20 at intersection 18. The FSW operation is a solid-state welding process, in which the heated alloys do not melt. As such, the refined microstructures of the Al-RE-TM alloys, are substantially retained while forming welded joint 20. This is in contrast to other welding techniques, such as fusion welding, in which the welded alloys are melted to form the welded joint. Melting Al-RE-TM alloys destroys the refined microstructures of the alloys, thereby lowering the strength and ductility of the resulting welded structure.

However, the FSW operation substantially preserves the pre-weld strengths of the A1-RE-TM alloys. The preserved strength of a weld is quantified by the "weld efficiency" of the welded alloy:

$$Weld\ Efficiency = \frac{Yield\ Strength_{Weld}}{Yield\ Strength_{BM}} \qquad \text{Equation 1}$$

where "Yield Strength$_{Weld}$" is the yield strength of the AL-RE-TM alloy at welded joint 20, and "Yield Strength$_{BM}$" is the yield strength of the AL-RE-TM alloy base material, prior to the FSW operation. The yield strengths are determined pursuant to ASTM E8-04, entitled "Test Methods of Tension Testing of Metallic Materials". Examples of suitable weld efficiencies for the alloys of welded joint 20 include at least about 90%, with particularly suitable weld efficiencies including at least about 95%.

In addition to substantially preserving the pre-weld strengths, the FSW operation also increases the ductility of welded joint 20 relative to the ductilities of metal parts 14 and 16 prior to welding. Examples of suitable increases in ductilities include percent increases of at least about 5%, with particularly suitable increases of at least about 10%. The ductilities are determined as tensile elongations to failure, pursuant to ASTM E8-04. The increased ductility accordingly reduces the risk of welded joint 20 fracturing under an applied tensile force.

Welded structure 10 can be formed with the use of a variety of FSW systems. Examples of suitable commercially available systems for FSW system 12 includes robotic and automatic FSW systems from Friction Stir Link, Inc., Menomonee Falls, WI. Suitable tool diameters for tool 24 range from about 10 millimeters (mm) to about 12 mm. Suitable dimensions for pin 26 may vary depending on the types of subcomponents being welded. For example, suitable diameters for pin 26 while performing an FSW operation on a corner joint in a hollow airfoil structure range from about 4 mm to about 6 mm. Alternatively, suitable diameters for pin 26 while performing an FSW operation on a tapered rib or an elliptical rib in a hollow airfoil structure range from about 2 mm to about 6 mm. The use of FSW system 12 for welding hollow structures, (e.g., corner joints, tapered ribs, and elliptical ribs in hollow airfoil structures) are disclosed in the US patent application No. 11/818,931 entitled "Hollow Structures Formed with Friction Stir Welding". Suitable lengths of pin 26 (i.e., depths of pin 26) are determined by the desired depth of the weld at intersection 18.

FIG. 2 is a flow diagram of method 34, which is a suitable method for forming welded structure 10 with FSW system 12. As shown, method 34 includes steps 36-42, and initially involves forming metal parts 14 and 16 (step 36). As discussed above, metal parts 14 and 16 may be a variety of different subcomponents, and may have a variety of geometric designs. Metal parts 14 and 16 may be formed from the Al-RE-TM alloys in a variety of manners, such as powder metallurgy processes, extrusion processes, die casting, strip casting, and combinations thereof. Additional suitable methods for forming metal parts 14 and 16 are disclosed in U.S. Patent No. 6,974,510. While discussed herein with respect to a pair of metal parts (i.e., metal parts 14 and 16), method 34 is also suitable for welding more than two metal parts to form a single welded structure.

After metal parts 14 and 16 are formed, metal parts 14 and 16 are then positioned adjacent each other to form intersection 18 at a desired welding location (step 38). Metal parts 14 and 16 are desirably braced together to prevent metal parts 14 and 16 from moving apart during the FSW operation. FSW system 12 is then used to weld metal parts 14 and 16 together at intersection 18 with an FSW operation (step 40). This forms welded joint 20 along intersection 18. If more than two metal parts are to be welded together, steps 38 and 40 are repeated for each intersection between the metal parts. When the FSW operation is completed, the top surfaces of metal parts 14 and 16 are finished (e.g., ground and polished) at welded joint 20 to provide a smooth aesthetic surface (step 42).

The operation parameters of FSW system 12 may vary depending on the geometries and materials of tool 24 and pin 26, and on the geometries of metal parts 14 and 16. Suitable rotational rates for tool 24 and pin 26 (in the direction of arrow 28) range from about 600 rotations-per-minute (rpm) to about 1,300 rpm, with particularly suitable rotational rates ranging from about 1,000 rpm to about 1,200 rpm. Suitable vertical loads applied to tool 24 and pin 26 (in the direction of arrow 30) range from about 230 kilograms (i.e., about 500 pounds) to about 1,360 kilograms (i.e., about 3,000 pounds). Suitable forward movement rates along intersection 18 (in the direction of arrow 32) range from about 2.5 centimeters/minute (i.e., about 1 inch/minute) to about 20 centimeters/minute (i.e., about 8 inches/minute). These operation parameters, when used with the above-discussed suitable dimensions for tool 24 and pin 26, provide high weld efficiencies and increased ductilities for welded joint 20.

The Al-RE-TM alloys used to form metal parts 14 and 16 are each glassy, partially-devitrified, or fully devitrified alloys that at least include aluminum (Al), a rare earth metal (RE), and a transition metal (TM). Suitable concentrations of the aluminum in the alloy include the balance between the entire alloy weight and the sum of the concentrations of the other metals in the alloy (e.g., the sum of the concentrations of the rare earth metal and the transition metal). Suitable concentrations of the rare earth metal in the alloy range from about 3% by weight to about 20% by weight, with particularly suitable concentrations ranging from about 7% by weight to about 13% by weight, based on the entire weight of the alloy. Suitable concentrations of the transition metal in the alloy range from about 0.1% by weight to about 20% by weight, with particularly suitable concentrations ranging from about 1% by weight to about 15% by weight, based on the entire weight of the alloy. Additional examples of suitable Al-RE-TM alloys include those disclosed in U.S. Patent No. 6,974,510.

In one embodiment, the Al-RE-TM alloy also includes one or more additional metals, such as magnesium, scandium, titanium, zirconium, iron, cobalt, gadolinium, and combinations thereof. Suitable concentrations of the additional metals in the alloy range from about 0.1 % by weight to about 10% by weight, with particularly suitable concentrations ranging from about 1% by weight to about 5% by weight, based on the entire weight of the alloy. An example of a particularly suitable A1-RE-TM alloy for use in forming metal parts 14 and 16 include an alloy of aluminum - yttrium (Y) - nickel (Ni) - cobalt (Co) (referred to herein as an "A1-Y-Ni-Co" alloy), where yttrium is referred to as a rare earth element.

EXAMPLES

The present invention is more particularly described in the following examples that are intended as illustrations only, since numerous modifications and variations within the scope of the present invention will be apparent to those skilled in the art. Unless otherwise noted, all parts, percentages, and ratios reported in the following examples are on a weight basis.

Welded structures of Examples 1 and 2 were each prepared from a pair of extruded metal parts derived from an Al-12.5Y-8.0Ni-1.7Co alloy. Each pair of metal parts were positioned adjacent each other at an intersection, and were welded together with an FSW system commercially available from Friction Stir Link, Inc., Menomonee Falls, WI. The FSW system had an 11 mm tool diameter and a 5 mm pin diameter, and was operated with a vertical load of 227 kilograms (i.e., 500 pounds) and a forward movement rate of 2.5 centimeters/minute (i.e., 1 inch/minute). For the welded structure of Example 1, the rotational rate of the tool and pin were 1,000 rpm, and for the welded structure of Example 2, the rotational rate of the tool and pin were 1,200 rpm. For each welded structure, the FSW operation welded the metal parts together at the intersection to form a welded joint.

The strengths and ductilities of the welded structures of Examples 1 and 2 were then measured and compared to the strengths and ductilities of the Al-12.5Y-8.0Ni-1.7Co alloy in an unwelded state (Comparative Example A). Table 1 provides the yield strengths, tensile strengths, weld efficiencies, and ductilities for the welded structures of Examples 1 and 2, and for the unwelded metal part of Comparative Example A. The yield strengths and tensile strengths were each measured at room temperature pursuant to ASTM E8-04, and the weld efficiencies were calculated pursuant to Equation 1, discussed above. The ductilities were each measured as tensile elongations to failure at room temperature pursuant to ASTM E8-04.

TABLE 1

| Examples | Yield Strength (Mpa) | Tensile Strength (Mpa) | Weld Efficiency | Ductility |
|---|---|---|---|---|
| Comparative Example A | 636 | 654 | N/A | 1.7% |
| Example 1 | 632 | 633 | 99% | 11.0% |
| Example 2 | 577 | 610 | 91% | 14.0% |

The data in Table 1 shows the good weld efficiencies and increased ductilities obtained by the FSW operation. For the welded structure of Example 1, the yield strength is substantially the same to that obtained for the metal part of Comparative Example A (i.e., a weld efficiency of 99%), and the ductility is increased by over 9%. Similarly, the welded structure of Example 2 had a weld efficiency of 91% and had a ductility increase of more than 12%. As discussed above, it is believed that the high weld efficiencies and increased ductilities are due to the retention of the fine-grained microstructures of the Al-Y-Ni-Co alloy.

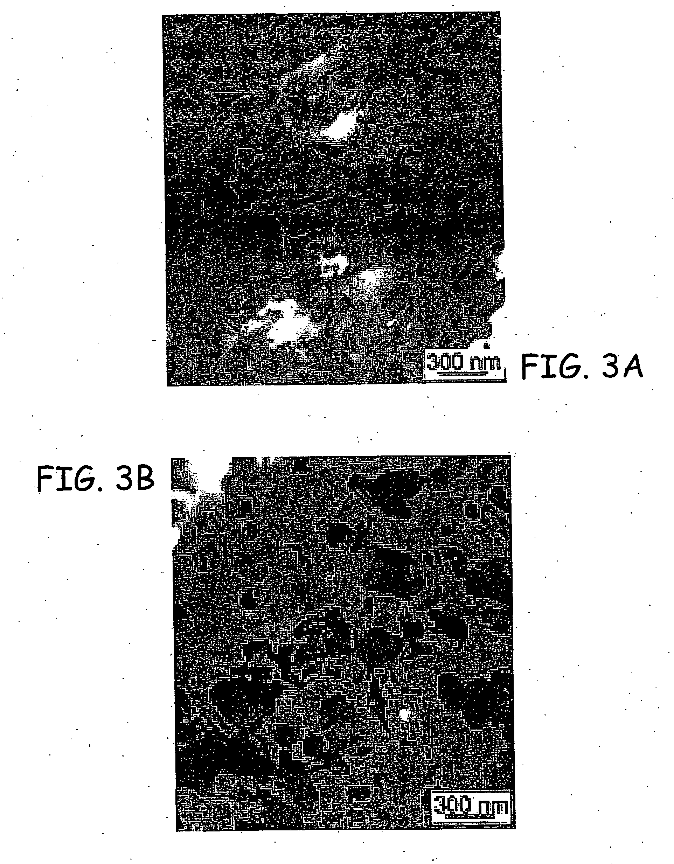

FIGS. 3A and 3B are TEM images of the alloys of Comparative Example A and Example 1, respectively. As shown in FIG. 3A, the microstructure of extruded alloy (i.e., non-welded) reveals slightly elongated grains along the extrusion direction. The average grain size was about 300 nanometers (nm), and there were some large grains with grain size of about 500 nm. The grain interiors have only a few particles, and are made of almost pure $\alpha$-A1 due to the low solubility of yttrium, nickel, and cobalt in aluminum. Most of the particles were situated on the grain boundary regions. The total volume fraction of particles was high (i.e., about 30%). Furthermore, there were two main types of particles: (1) rod-shaped ternary phases (having lengths ranging from 200-400 nm and widths ranging from 30-40 nm) with a composition of $Al_{19}Ni_5Y_3$ and $Al_{23}Ni_6Y_4$, and (2) near-equiaxed pseudo-binary phases (having diameters ranging from about 150-200 nm) with a composition close to $Al_3(Y, Co)$. The rod-shaped ternary phases accounted for the majority of the particles.

As shown in FIG. 3B, after the FSW operation, the microstructure is homogenized, and the elongated matrix grains in the as-extruded condition were changed to near-equiaxed shape with uniform size. Additionally, the shape of rod-shape particles were changed to near-equiaxed ones, and both the grains and particles coarsened slightly. Accordingly, the alloy of Example 1 substantially retained the fine-grained microstructures of the Al-Y-Ni-Co alloy.

Although the present invention has been described with reference to preferred embodiments, workers skilled in the art will recognize that changes may be made in form and detail without departing from the scope of the invention as defined by the claims.

**Claims**

1. A welded structure (10) comprising:

   a first metal part (14) derived from a devitrified Al-RE-TM alloy having nanometer-sized grain structures and nanometer sized intermetallic phases; and
   a second metal part (16) derived from a the same devitrified Al-RE-TM alloy having nanometer-sized grain structures and nanometer sized intermetallic phases; **characterised by**
   a friction stir welded joint (20) between the first metal part (14) and the second metal part (16) without leaving coarse microstructures that reduce strength and ductility.

2. The welded structure (10) of claim 1, wherein the Al-RE-TM alloy comprises yttrium and nickel.

3. The welded structure (10) of claim 1 or 2, wherein the Al-RE-TM comprises a material selected from the group consisting of magnesium, scandium, titanium, zirconium, iron, cobalt, gadolinium, and combinations thereof.

4. The welded structure (10) of claim 1, 2 or 3, wherein the Al-RE-TM alloy comprises an Al-Y-Ni-Co alloy.

5. The welded structure (10) of any preceding claim, wherein the welded structure (10) has a weld efficiency of at least about 90% when measured pursuant to ASTM E8-04.

6. The welded structure (10) of any preceding claim, wherein the welded structure (10) has a ductility at least 5% greater than a ductility of the Al-RE-TM alloy in an unwelded state, wherein the ductility is measured pursuant to ASTM E8-04.

7. The welded structure (10) of claim 6, wherein the welded structure has a ductility at least 10% greater than the ductility of the Al-RE-TM alloy in an unwelded state, wherein the ductility is measured pursuant to ASTM E8-04.

8. A method of forming a welded structure(10), the method comprising providing a first metal part (14) and a second metal part (16), wherein the first metal part (14) and the second metal part (16) are each derived from the same devitrified Al-RE-TM alloy having nanometer-sized grain structures and nanometer sized intermetallic phases; **characterised by** friction stir welding an intersection (18) between the first metal part (14) and the second metal part (16) without leaving coarse microstructures that reduce strength and ductility.

9. The method of claim 8, wherein the Al-RE-TM alloy comprises yttrium and nickel.

10. The method of claim 8 or 9, wherein the Al-RE-TM alloy comprises a material selected from the group consisting of magnesium, scandium, titanium, zirconium, iron, cobalt, gadolinium, and combinations thereof.

11. The method of claim 8, 9 or 10, wherein the Al-RE-TM alloy comprises an Al-Y-Ni-Co alloy.

**12.** The method of claims 8-11, wherein the friction stir welding comprises rotating a tool (24) of a friction stir welding system (12) at a rotational rate ranging from 600 rotations-per-minute to 1,300 rotations-per-minute, wherein the tool (24) has a diameter ranging from 10 millimeters to 12 millimeters.

**13.** The method of claim 12, wherein the rotational rate ranges from 1,000 rotations-per-minute to 1,200 rotations-per-minute.

**14.** The method of claims 8-13, wherein the welded structure has a weld efficiency of at least 90% when measured pursuant to ASTM E8-04.

**Patentansprüche**

**1.** Geschweißte Struktur (10), umfassend:

ein erstes Metallteil (14), abgeleitet aus einer entglasten Al-RE-TM-Legierung mit nanometergroßen Kornstrukturen und nanometergroßen intermetallischen Phasen; und
ein zweites Metallteil (16), abgeleitet aus derselben entglasten Al-RE-TM-Legierung mit nanometergroßen Kornstrukturen und nanometergroßen intermetallischen Phasen; **gekennzeichnet durch**
einen reibrührgeschweißten Fügestoß (20) zwischen dem ersten Metallteil (14) und dem zweiten Metallteil (16) ohne Hinterlassen grober Mikrostrukturen, die die Festigkeit und Duktilität verringern.

**2.** Geschweißte Struktur (10) nach Anspruch 1, wobei die Al-RE-TM-Legierung Yttrium und Nickel umfasst.

**3.** Geschweißte Struktur (10) nach Anspruch 1 oder 2, wobei die Al-RE-TMLegierung ein Material umfasst, das aus der Gruppe, die aus Magnesium, Scandium, Titan, Zirconium, Eisen, Kobalt, Gadolinium und Kombinationen davon besteht, ausgewählt ist.

**4.** Geschweißte Struktur (10) nach Anspruch 1, 2 oder 3, wobei die Al-RE-TM-Legierung eine Al-Y-Ni-Co-Legierung umfasst.

**5.** Geschweißte Struktur (10) nach einem der vorhergehenden Ansprüche, wobei die geschweißte Struktur (10) eine Schweißeffizienz von mindestens ca. 90 % aufweist, wenn sie nach ASTM E8-04 gemessen wird.

**6.** Geschweißte Struktur (10) nach einem der vorhergehenden Ansprüche, wobei die geschweißte Struktur (10) eine mindestens 5 % größere Duktilität als eine Duktilität der Al-RE-TM-Legierung in ungeschweißtem Zustand aufweist, wobei die Duktilität nach ASTM E8-04 gemessen wird.

**7.** Geschweißte Struktur (10) nach Anspruch 6, wobei die geschweißte Struktur eine mindestens 10 % größere Duktilität als eine Duktilität der Al-RE-TM-Legierung in ungeschweißtem Zustand aufweist, wobei die Duktilität nach ASTM E8-04 gemessen wird.

**8.** Verfahren zum Bilden einer geschweißten Struktur (10), wobei das Verfahren Bereitstellen eines ersten Metallteils (14) und eines zweiten Metallteils (16) umfasst, wobei das erste Metallteil (14) und das zweite Metallteil (16) jeweils aus derselben entglasten Al-RE-TM-Legierung mit nanometergroßen Kornstrukturen und nanometergroßen intermetallischen Phasen abgeleitet sind; **gekennzeichnet durch** Reibrührschweißen einer Schnittfläche (18) zwischen dem ersten Metallteil (14) und dem zweiten Metallteil (16), ohne grobe Mikrostrukturen, die die Festigkeit und Duktilität verringern, zu hinterlassen.

**9.** Verfahren nach Anspruch 8, wobei die Al-RE-TM-Legierung Yttrium und Nickel umfasst.

**10.** Verfahren nach Anspruch 8 oder 9, wobei die Al-RE-TM-Legierung ein Material umfasst, das aus der Gruppe, die aus Magnesium, Scandium, Titan, Zirconium, Eisen, Kobalt, Gadolinium und Kombinationen davon besteht, ausgewählt ist.

**11.** Verfahren nach Anspruch 8, 9 oder 10, wobei die Al-RE-TM-Legierung eine Al-Y-Ni-Co-Legierung umfasst.

**12.** Verfahren nach Anspruch 8 bis 11, wobei das Reibrührschweißen Drehen eines Werkzeugs (24) eines Reibrührschweißsystems (12) mit einer Drehgeschwindigkeit von 600 Umdrehungen pro Minute bis 1.300 Umdrehungen pro Minute umfasst, wobei das Werkzeug (24) einen Durchmesser von 10 Millimetern bis 12 Millimeter aufweist.

13. Verfahren nach Anspruch 12, wobei die Drehgeschwindigkeit von 1.000 Umdrehungen pro Minute bis 1.200 Umdrehungen pro Minute reicht.

14. Verfahren nach Anspruch 8 bis 13, wobei die geschweißte Struktur eine Schweißeffizienz von mindestens 90 % aufweist, wenn sie nach ASTM E8-04 gemessen wird.

**Revendications**

1. Structure soudée (10) comprenant :

   une première partie métallique (14) dérivée d'un alliage Al-RE-TM dévitrifié présentant des structures de grain de taille nanométrique et des phases intermétalliques de taille nanométrique ; et
   une deuxième partie métallique (16) dérivée du même alliage Al-RE-TM dévitrifié présentant des structures de grain de taille nanométrique et des phases intermétalliques de taille nanométrique ; **caractérisée par**
   un joint soudé par friction malaxage (20) entre la première partie métallique (14) et la deuxième partie métallique (16) sans laisser de microstructures grossières réduisant la résistance mécanique et la ductilité.

2. Structure soudée (10) selon la revendication 1, dans laquelle l'alliage Al-RE-TM comprend de l'yttrium et du nickel.

3. Structure soudée (10) selon la revendication 1 ou 2, dans laquelle l'alliage Al-RE-TM comprend un matériau choisi dans l'ensemble constitué de magnésium, de scandium, de titane, de zirconium, de fer, de cobalt, de gadolinium et de leurs combinaisons.

4. Structure soudée (10) selon la revendication 1, 2 ou 3, dans laquelle l'alliage Al-RE-TM comprend un alliage Al-Y-Ni-Co.

5. Structure soudée (10) selon l'une quelconque des revendications précédentes, dans laquelle la structure soudée (10) a un rendement de soudage d'au moins environ 90 % selon une mesure conforme à l'ASTM E8-04.

6. Structure soudée (10) selon l'une quelconque des revendications précédentes, dans laquelle la structure soudée (10) a une ductilité d'au moins 5 % de plus qu'une ductilité de l'alliage Al-RE-TM dans un état non soudé, la ductilité étant mesurée selon l'ASTM E8-04.

7. Structure soudée (10) selon la revendication 6, dans laquelle la structure soudée a une ductilité au moins 10 % supérieure à la ductilité de l'alliage Al-RE-TM dans un état non soudé, la ductilité étant mesurée selon l'ASTM E8-04.

8. Procédé de formation d'une structure soudée (10), ce procédé comprenant l'utilisation d'une première partie métallique (14) et d'une deuxième partie métallique (16), la première partie métallique (14) et la deuxième partie métallique (16) étant chacune dérivée du même alliage Al-RE-TM dévitrifié présentant des structures de grain de taille nanométrique et des phases intermétalliques de taille nanométrique et des phases intermétalliques de taille nanométrique ; **caractérisé par** le soudage par friction malaxage d'une intersection (18) entre la première partie métallique (14) et la deuxième partie métallique (16) sans laisser de microstructures grossières réduisant la résistance mécanique et la ductilité.

9. Procédé selon la revendication 8, dans lequel l'alliage Al-RE-TM comprend de l'yttrium et du nickel.

10. Procédé selon la revendication 8 ou 9, dans lequel l'alliage Al-RE-TM comprend un matériau choisi dans l'ensemble constitué de magnésium, de scandium, de titane, de zirconium, de fer, de cobalt, de gadolinium et de leurs combinaisons.

11. Procédé selon la revendication 8, 9 ou 10, dans lequel l'alliage Al-RE-TM comprend un alliage Al-Y-Ni-Co.

12. Procédé selon les revendications 8 à 11, dans lequel le soudage par friction malaxage comprend la rotation d'un outil (24) d'un système de soudage par friction malaxage (12) à une vitesse de rotation comprise entre 600 et 1 300 tours par minute, l'outil (24) ayant un diamètre compris entre 10 et 12 mm.

13. Procédé selon la revendication 12, dans lequel la vitesse de rotation est comprise entre 1 000 tours par minute et 1 200 tours par minute.

14. Procédé selon les revendications 8 à 13, dans lequel la structure soudée a un rendement de soudage d'au moins 90 % selon une mesure conforme à l'ASTM E8-04.

FIG. 1

| Form metal parts | 36 |
| Position metal parts to obtain intersection | 38 |
| Friction stir weld metal parts | 40 |
| Finish top surfaces of metal parts | 42 |

FIG. 2

FIG. 3A

FIG. 3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1471157 A
- US 6939416 B
- US 20040109787 A
- US 11818931 B
- US 6974510 B